Europäisches Patentamt

European Patent Office

Office européen des brevets

(11) Publication number: **0 454 224 A1**

# EUROPEAN PATENT APPLICATION

(21) Application number: **91200907.3**

(22) Date of filing: **16.04.91**

(51) Int. Cl.⁵: **C08F 8/44**, C08F 8/12, C11C 1/10

(30) Priority: **18.04.90 NL 9000920**

(43) Date of publication of application:
**30.10.91 Bulletin 91/44**

(84) Designated Contracting States:
**AT BE CH DE DK FR LI LU NL SE**

(71) Applicant: **VIERHOUTEN RECYCLING B.V.**
**Kalkoenweg 25**
**NL-3851 SB Ermelo(NL)**

(72) Inventor: **Vierhouten, Barend**
**Kalkoenweg 25**
**NL-3851 SB Ermelo(NL)**

(74) Representative: **Prins, Hendrik Willem et al**
**Octrooibureau Arnold & Siedsma**
**Sweelinckplein, 1**
**NL-2517 GK The Hague(NL)**

(54) Emulsifier, emulsion and anti-swelling agent from polymerized oil.

(57) The invention relates to a method for preparing an emulsifier on the basis of fatty acid polymer, comprising of:
i) saponifying polymerized oil containing fatty acid polymer;
ii) separating a fatty acid fraction from the saponified oil; and
iii) separating the fatty acid polymer,
to an emulsifier and an emulsion containing said fatty acid polymer and/or fatty acid oxypolymer, and to a method for preparing form-retaining products from wood chippings using as anti-swelling agent said polymeric triglycerides.

EP 0 454 224 A1

EP 0 454 224 A1

The present invention relates to a number of products which are obtainable from or are present in combination in polymerized oil.

Understood by oil in this context is a mixture on a basis substantially of triglycerides which has a liquid or solid consistency at room temperature.

In addition to monomeric triglycerides and a small quantity of fatty acid, polymerized oil also contains polymerized triglycerides and polymerized fatty acids. These polymers result from covalent bonds between the fatty acid chains particularly of unsaturated fatty acids. If the bond is brought about via an oxygen atom, then these are called oxypolymers. In polymerized oil the polymeric triglycerides can occur as dimers, trimers, tetramers and oligomers. Polymerized oil often contains more than 5% trimers, tetramers and higher of the triglycerides.

Polymerized oil contains polymerized fatty acid in a content of generally more than 3%, for instance 5 to 15%, as dimers, trimers and higher polymers.

The polymerized oil can be formed by blowing air into the oil at increased temperature, whereby oxidation reactions occur between the monounsaturated or polyunsaturated fatty acids or fatty acid chains in the triglycerides. Polymerized oil moreover results during the use of the oil as for instance frying oil. A very important source of polymerized oil is formed by waste oil and waste fat which preferably contains a minimum of 5 to a maximum of 15% polymerized fatty acid and more than 5% trimer or polymer triglyceride.

The invention is based on the insight that polmeric triglycerides, the saponification products thereof (polymeric fatty acids and polymeric oxyfatty acids) as well as polymerized fatty acid (fatty acid polymer), each individually or in combination, form industrially valuable products.

After saponification the polymeric fatty acids form emulsifiers suitable for forming oil-in-water and water-in-oil emulsions.

The polymeric triglycerides are valuable anti-swelling agents that are used in the manufacture of form-retaining products from wood chippings.

A particularly valuable product consists of polymerized oil, the free fatty acids of which - monomers and polymers - are saponified, whereby an emulsion results with saponified, polymerized fatty acids as emulsifier for the polymeric triglycerides as anti-swelling agent. In this case the polymeric triglycerides also act with the monomeric triglycerides present as lubricant.

A first aspect of the invention relates to a method for preparing an emulsifier on the basis of fatty acid polymer, comprising of:

i) saponifying polymerized oil containing fatty acid polymer;
ii) separating a fatty acid fraction from the saponified oil; and
iii) separating the fatty acid polymer.

Depending on the polymerized oil used the fatty acid polymer consists of monounsaturated fatty acids, of polyunsaturated fatty acids and mixtures thereof.

The invention further relates to the use of the emulsifiers on the basis of fatty acid polymer and or fatty acid oxypolymer obtained according to the invention.

A second aspect of the invention relates to emulsions containing the above described emulsifier according to the invention in addition to oil and water.

A third aspect of the invention relates to the preparing of form-retaining products from wood chippings, wherein as anti-swelling agent polymeric triglycerides are used, namely polymeric triglycerides originating from polymerized oil. According to a preferred embodiment an emulsion is used in the method for preparing form-retaining products which consists of polymerized oil, the free fatty acids of which - monomers and (oxy)polymers - are neutralized using alkali such as ammonia, sodium hydroxide, potassium hydroxide and the like. This neutralized oil contains saponified polymeric fatty acids as emulsifier for polymeric triglycerides serving as anti-swelling agent.

It is noted that the emulsifier according to the invention can also be used in combination with conventional anti-swelling agents, such as paraffins, which are described by E.Roffael et al. in Adhäsion 11/82 "Hydrophobierung von Spanplatten mit Paraffinen, Teil 1: Kenntnisse und eigene Untersuchungen".

The invention will be further elucidated on the basis of a number of embodiments of emulsions prepared with the emulsifier according to the invention and of emulsions used for manufacturing anti-swelling agent preparations applied in the method for preparing from-retaining products from wood chippings.

1. Preparing emulsifiers according to the invention

EXAMPLE 1

2

100 kg of air-blown, polymerized soya oil (polymer content 25%) is saponified with 100 kg of water containing 0.5% by weight of zinc oxide. The saponification reaction is performed for four hours at 250°C and a pressure of 40 bar.

After cooling the mixture is brought with a 10% sulphuric acid solution to pH 3.5. After separation in phases the upper, organic layer containing fatty acids and polymeric fatty acids is separated and subsequently distilled at 250°C and a pressure of 2 millibar. The obtained residue contains approximately 80% fatty acid oxypolymers of polyunsaturated fatty acids.

EXAMPLE 2

For preparation of an emulsifier on a basis of monounsaturated fatty acid oxypolymers the method of example 1 is repeated, with the difference that instead of air-blown, polymerized soya oil use is made of air-blown, polymerized olive oil. The obtained residue contains approximately 80% monounsaturated fatty acid oxypolymers.

EXAMPLE 3

For preparation of an emulsifier according to the invention on a basis of polyunsaturated fatty acid polymers the method according to example 1 is repeated, but instead of air-blown, polymerized soya oil use is made of polymerized soya oil that is partially polymerized under nitrogen atmosphere at 300°.

The residue obtained in this case contains approximately 80% fatty acid polymer of polyunsaturated fatty acids.

EXAMPLE 4

For preparation of fatty acid polymers of monounsaturated fatty acids the method according to example 3 is repeated, with the difference that instead of polymerized soya oil use is made of polymerized olive oil polymerized at 300°C in a nitrogen atmosphere.

2. Preparation of emulsions according to the invention

Emulsions according to the invention were prepared with the oil compositions given in table 1.

60 kg of the oil composition mentioned in table 1 is placed in a boiler of 200 l provided with a stirrer and heating means. While being slowly stirred the oil composition is heated to 90°C. 40 kg of water is subsequently emulsified into the oil composition at 90°C during vigorous stirring. After a homogeneous emulsion has been obtained, the pH is brought to 8.5-10.0 using alkali (for instance ammonia, sodium hydroxide, potassium hydroxide etc.). After saponification is completed the emulsion is cooled to 20°C.

3

**Table 1**    Oil compositions for the emulsion according to the invention

| Oil composition | Composition |
|---|---|
| 1 | 10 g fatty acid oxypolmers according to example 1<br>90 g soya oil |
| 2 | 10 g fatty acid oxypolymers according to example 1<br>90 g palm oil |
| 3 | 5 g oxypolymers according to example 1<br>5 g oxypolymers according to example 2<br>30 g polymerized soya oil (7.8% polymeric triglycerides) |
| 4 | 10 g fatty acid polymers according to example 3<br>90 g palm oil |
| 5 | 5 g fatty acid polymers according to example 3<br>5 g fatty acid polymers according to example 4<br>90 g palm oil |
| 6 | 5 g fatty acid polymers according to example 3<br>5 g fatty acid polymers according to example 4<br>90 g polymerized palm oil (5.5% polymeric triglycerides) |
| 7 | polymerized soya oil with 7.6% free fatty acid and 8.2% polymeric triglycerides (used frying oil) |
| 8 | polymerized rape oil with 2.4% free fatty acid and 5.8% polymeric triglycerides (used frying oil) |
| 9 | polymerized fish oil (with oxygen-blown fish oil) with 3.4% free fatty acid and 8.6% polymeric triglycerides |
| 10 | polymerized linseed oil (from a paint oil factory) with 4.2% free fatty acid and 7.8% polymeric triglycerides |

(table 1 cont.)

| | | |
|---|---|---|
| 11 | polymerized sunflower oil with 5.2% free fatty acid and 10.2% polymeric triglycerides (used frying oil) | |
| 12 | 10 g polymeric fatty acids according to example 1 | |
| | 90 g bees wax | |
| 13 | 10 g polymeric fatty acids according to example 2 | |
| | 90 g bees wax | |
| 14 | 5 g polymeric fatty acids according to example 1 | |
| | 5 g polymeric fatty acids according to example 3 | |
| | 90 g bees wax | |
| 15 | 10 g polymeric fatty acids according to example 1 | |
| | 90 g technical grade paraffin wax (melting range 45-55°C) | |
| 16 | 5 g polymeric fatty acids according to example 1 | |
| | 5 g polymeric fatty acids according to example 3 | |
| | 90 g technical grade paraffin (melting range 45-55°C) | |

<u>3. Manufacture of form-retaining products from wood chippings</u>

Wood chippings were manufactured from for instance wood waste and reference is made for a method of manufacturing these wood chippings to NL-A-84.00874.

Curved boards with a radius of curvature of 130 mm, a thickness of 8 mm and a length of 2,000 mm were manufactured at a pressing temperature of 180°C, a pressure of 90 kg/cm² and a pressing time of circa 48 seconds.

EXAMPLE 5 (comparison)

The curved boards were pressed from a mixture of 100 kg wood chippings, 18.2 kg of 66% urea-melamine-formaldehyde resin solution, 0.4 kg of water and 0.6 kg of a 20% aluminium sulphate solution. The thickness swelling and the water absorption were subsequently determined after two hour and twenty four hour immersion in water. The results are shown in table 2.

EXAMPLE 6 (comparison)

A curved, form-retaining product from wood chippings was manufactured using a mixture consisting of 100 kg of wood chippings, 12.0 kg of a 66% solution of urea-formaldehyde resin, 0.4 kg of water and 0.6 kg of a 20% aluminium sulphate solution.

The measured thickness swelling and water absorption are likewise shown in table 2.

EXAMPLE 7 (according to the invention)

In the same manner as in example 5 form-retaining products were manufactured from wood chippings, but instead of 0.4 kg of water 1 kg of the 60% emulsion of the oil composition 1-16 from table 1 was used. The measured thickness swelling and water absorption are likewise given in table 2.

EXAMPLE 8 (according to the invention)

In the same manner as in example 6 form-retaining products were manufactured from wood chippings, but instead of 0.4 kg of water 1 kg of the 60% emulsion of the oil composition from table 1 was used. The measured thickness swelling and water absorption are likewise given in table 2.

EXAMPLE 9 (according to the invention)

The preparation of a form-retaining product from wood chippings according to example 7 was repeated, with the difference that instead of the emulsion according to the invention 0.6 kg of polymerized fish oil with 3.5% free fatty acid and circa 20% polymerized triglyceride was used. The thickness swelling (%) after two and twenty four hours amounted respectively to 6% and 9%. The water absorption (%) after two and twenty four hours amounted respectively to 9% and 16%.

EXAMPLE 10 (according to the invention)

The preparation of form-retaining products from wood chippings according to example 8 was repeated, with the difference that instead of the emulsion 0.6 kg of polymerized fish oil with 3.5% free fatty acid and circa 20% polymeric triglyceride was used. The thickness swelling (%) after two and twenty four hours amounted respectively to 10% and 13%. The water absorption (%) after two and twenty four hours amounted respectively to 12% and 19%.

Table 2

| | Urea-melamine-formaldehyde | | | | Ureum-foramldehyde | | | |
|---|---|---|---|---|---|---|---|---|
| | Thickness swelling (%) | | Water absorption (%) | | Thickness swelling (%) | | Water absorption (%) | |
| | after 2 hrs | after 24 hrs | after 2 hrs | after 24 hrs | after 2 hrs | after 24 hrs | after 2 hrs | after 24 hrs |
| Example 5 | 12 | 18 | 11 | 22 | 16 | 22 | 17 | 29 |
| Example 6 | * | * | * | * | * | * | * | * |
| oil composition 1 | 8 | 12 | 8 | 18 | 12 | 16 | 14 | 24 |
| 2 | 7 | 11 | 7 | 16 | 11 | 15 | 13 | 22 |
| 3 | 6 | 9 | 9 | 15 | 10 | 13 | 15 | 21 |
| 4 | 7 | 10 | 7 | 16 | 11 | 14 | 13 | 22 |
| 5 | 7 | 11 | 8 | 15 | 11 | 15 | 14 | 21 |
| 6 | 7 | 10 | 7 | 15 | 11 | 14 | 13 | 21 |
| 7 | 6 | 9 | 9 | 15 | 10 | 13 | 15 | 21 |
| 8 | 7 | 10 | 7 | 16 | 11 | 14 | 13 | 22 |
| 9 | 6 | 9 | 8 | 14 | 10 | 13 | 14 | 20 |
| 10 | 6 | 9 | 9 | 15 | 10 | 13 | 15 | 21 |
| 11 | 7 | 11 | 7 | 16 | 11 | 15 | 13 | 22 |
| 12 | 8 | 12 | 8 | 17 | 12 | 16 | 14 | 23 |
| 13 | 9 | 13 | 9 | 19 | 13 | 17 | 15 | 24 |
| 14 | 8 | 13 | 8 | 17 | 12 | 17 | 14 | 22 |
| 15 | 9 | 14 | 9 | 15 | 13 | 18 | 15 | 20 |
| 16 | 8 | 13 | 8 | 16 | 12 | 17 | 14 | 21 |

## Claims

1. Method for preparing an emulsifier on the basis of fatty acid polymer, comprising of:
    i) saponifying polymerized oil containing fatty acid polymer;

7

ii) separating a fatty acid fraction from the saponified oil; and
iii) separating the fatty acid polymer.

2. Method as claimed in claim 1, wherein the fatty acid polymer is formed from monounsaturated fatty acids.

3. Method as claimed in claim 1 or 2, wherein the fatty acid polymer is formed from polyunsaturated fatty acids.

4. Method as claimed in claims 1-3, wherein polymerized oil containing fatty acid oxypolymer is saponified.

5. Method as claimed in claim 4, wherein polymerized oil is aerated.

6. Method as claimed in claims 1-5, wherein the oil comprises waste oil such as used frying oil.

7. Emulsifier preparable according to claims 1-6, containing a fatty acid polymer and/or fatty acid oxypolymer.

8. Emulsion containing:
    i) an emulsifier as claimed in claim 7;
    ii) an oil; and
    iii) water.

9. Emulsion as claimed in claim 8, wherein the emulsifier is obtained by saponifying polymerized oil.

10. Emulsion as claimed in claim 9, wherein the oil comprises waste oil such as used frying oil.

11. Method of preparing form-retaining products from wood chippings, wherein wood chippings are provided with a curable binder agent, a lubricant and an anti-swelling agent, and optionally a curing agent, and the wood chippings are subsequently pressed to the form-retaining product, characterized in that the anti-swelling agent comprises polymeric triglycerides.

12. Method as claimed in claim 11, wherein the anti-swelling agent comprises polymerized oil.

13. Method as claimed in claim 11 or 12, wherein the lubricant and the anti-swelling agent are included in an emulsion.

14. Method as claimed in claim 13, wherein an emulsion as claimed in claims 8-10 is used as emulsion.

15. The use of polymeric triglycerides as anti-swelling agent in form-retaining products from wood chippings.

16. The use of polymerized oil as anti-swelling agent in form-retaining products from wood chippings.

17. The use of saponified, polymerized oil as emulsion containing anti-swelling agent in preparing form-retaining products from wood chippings.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-B-1 273 100 (RHEINPREUSSEN AG FÜR BERGBAU UND CHEMIE) <br> * Claim; column 1, line 44 - column 2, line 37 * | 1 | C 08 F 8/44 <br> C 08 F 8/12 <br> C 11 C 1/10 |
| A | FR-A-1 246 138 (NATIONAL LEAD) <br> * Summary * | 1 | |
| A | WO-A-8 100 061 (SOUTHLAND CORP.) <br> * Claims 1-44 * | 1 | |
| A | US-A-2 283 456 (H. PARDUN) <br> * Whole document * | 1 | |
| A | DE-A-1 495 338 (CANADIAN INDUSTRIES) <br> * Claims 1-7; page 6 * | 1 | |
| A | GB-A-9 123 82 (PROCTER & GAMBLE LTD) <br> * Claims 1-6 * | 1 | |
| A | EP-A-0 021 433 (HENKEL KGaA) <br> * Claims 1-7 * | 1 | |

TECHNICAL FIELDS SEARCHED (Int. Cl.5)

C 08 F
C 11 C

The present search report has been drawn up for all claims

| Place of search | Date of completion of search | Examiner |
|---|---|---|
| The Hague | 06 August 91 | PERMENTIER W.A. |